# EUROPÄISCHE PATENTSCHRIFT

(11) **EP 0 990 009 B1**
(45) Veröffentlichungstag und Bekanntmachung des Hinweises auf die Patenterteilung: **13.03.2002**
(21) Anmeldenummer: 98933631.8
(22) Anmeldetag: 18.06.1998
(51) Int. Cl.: C08J 3/05, C08L 27/12

(54) **WÄSSRIGE DISPERSION VON FLUORPOLYMEREN UNTERSCHIEDLICHER TEILCHENGRÖSSE**
AQUEOUS DISPERSION OF FLUOROPOLYMERS OF VARYING PARTICLE SIZE
DISPERSION AQUEUSE DE POLYMERES FLUORES A PARTICULES DE TAILLES DIFFERENTES

(30) Priorität: 24.06.1997 DE 19726802
(43) Veröffentlichungstag der Anmeldung: 05.04.2000
(73) Patentinhaber: Dyneon GmbH & Co. KG, 84504 Burgkirchen (DE)
(72) Erfinder: BLÄDEL, Hermann, D-84547 Emmerting (DE); LÖHR, Gernot, D-84508 Burgkirchen (DE); GROSSMANN, Gerd, D-84556 Kastl (DE)
(86) Internationale Anmeldenummer: EP9803678
(87) Internationale Veröffentlichungsnummer: WO9858984

(56) Entgegenhaltungen:
- EP-A- 0 010 152
- WO-A-97/36954
- DE-A- 4 340 943
- US-A- 3 925 292

## Beschreibung

Aus der US-A-5 576 381 ist eine wäßrige Dispersion von durch Emulsionspolymerisation gewonnenen, nicht aus der Schmelze verarbeitbaren, beim Sintern filmbildenden Fluorpolymeren bekannt, enthaltend ein Fluorpolymer A) mit einer mittleren Teilchengröße (Zahlenmittel) von 180 bis 400 nm und ein Fluorpolymer B) mit einer um den Faktor etwa 0,3 bis etwa 0,7 niedrigeren mittleren Teilchengröße, so daß die gesamte Dispersion eine nichtmonomodale Zahlenverteilung des Partikeldurchmessers besitzt. Diese Dispersion wird durch Mischen entsprechender Dispersionen und gegebenenfalls Aufkonzentrieren auf den gewünschten Feststoffgehalt gewonnen. Solche Dispersionen eignen sich zur Tränkung, Imprägnierung oder Beschichtung von Oberflächen, zur Tränkung oder Imprägnierung von Fasern oder Flächengebilden aus Fasern oder porösen Stoffen und zur Beschichtung von Glasfasergeweben sowie zur Formulierung von Metallbeschichtungssystemen.

Die Erfindung betrifft demgegenüber eine Dispersion von durch Emulsionspolymerisation gewonnenen Fluorpolymeren unterschiedlicher Teilchengröße, enthaltend mindestens ein Fluorpolymer A) mit einer mittleren Teilchengröße (Zahlenmittel) von mindestens 200 nm und mindestens ein Fluorpolymer B) mit einer mittleren Teilchengröße (Zahlenmittel) von höchstens 100 nm, wobei eine der Komponenten A) und B) ein Thermoplast ist und die andere Komponente nicht aus der Schmelze verarbeitbar ist, und wobei die gesamte Dispersion eine nichtmonomodale Zahlenverteilung des Partikeldurchmessers besitzt.

Die genannten mittleren Teilchengrößen verstehen sich als Zahlenmittel des Partikeldurchmessers der weitgehend kugelförmigen Teilchen, das sich durch Auszählung der in der elektronenmikroskopischen Aufnahme der Dispersion meßbaren Teilchendurchmesser ergibt. Bei nichtkugelförmigen Teilchen gilt als Teilchendurchmesser das geometrische Mittel der beiden Hauptachsen.

Bevorzugte erfindungsgemäße Dispersionen sind durch die folgenden Merkmale gekennzeichnet:

Die nicht aus der Schmelze verarbeitbare Komponente ist vorzugsweise Polytetrafluorethylen (PTFE) oder ein Tetrafluorethylen(TFE)-Polymeres mit so kleinen Mengen an einem Comonomer wie Hexafluorpropen (HFP) oder einem perfluorierten Alkylvinylether (PAVE) mit 1 bis 3 C-Atomen in der Alkylgruppe, beispielsweise Perfluor-(n-propyl-vinyl)-ether (PPVE), daß das Polymer nicht schmelzverarbeitbar ist. Solche Polymere werden "modifiziertes" PTFE genannt.

Unter dem Begriff "Thermoplast" versteht man bekanntermaßen ein Polymer, das aus der Schmelze verarbeitbar ist. Handelsübliche thermoplastische Fluorpolymere sind Polymere des TFE, die als Comonomere einen PAVE mit einer Alkylgruppe von 1 bis 3 C-Atomen, ein von TFE verschiedenes fluoriertes Alken mit 2 bis 4 C-Atomen, beispielsweise Vinylfluorid, Vinylidenfluorid oder HFP sowie unfluorierte niedermolekulare Alkene wie Ethylen oder Propylen beziehungsweise zwei oder drei dieser Comonomeren enthalten.

Bevorzugte Thermoplaste sind Bipolymere mit Einheiten aus überwiegend TFE und untergeordneten molaren Anteilen an PPVE, HFP, Ethylen oder Propylen sowie Terpolymere mit überwiegend Einheiten des TFE und Einheiten des Ethylens und HFP.

Die Menge an Comonomeren bemißt sich so, daß das Copolymere schmelzverarbeitbar ist, aber noch keine elastomeren Eigenschaften aufweist.

Bevorzugte Teilchengrößen (Zahlenmittel) sind für die Komponente A) mindestens 230 nm und für die Komponente B) höchstens 80, vorzugsweise höchstens 50, insbesondere höchstens 40 nm.

Aus der US-A-3 925 292 sind wäßrige Dispersionen bekannt, die a) ein nichtschmelzverarbeitbares Polytetrafluorethylen, b) ein nichtelastomeres, schmelzverarbeitbares Copolymeres von Tetrafluorethylen und ein nichtionisches Tensid enthalten. Vorzugsweise soll das Polytetrafluorethylen eine durchschnittliche Teilchengröße von mindestens 300 nm aufweisen. Über die Teilchengröße des Copolymeren ist keine Aussage getroffen; lediglich in einem Beispiel ist eine Teilchengröße von 160 nm angegeben. In diesem Beispiel beträgt die mittlere Teilchengröße des Polytetrafluorethylens 230 nm und liegt damit in der gleichen Größenordnung wie die des Copolymeren.

Zur Herstellung von feinteiligen Polymeren entsprechend der erfindungsgemäßen Komponente B) müssen besondere Vorkehrungen getroffen werden, beispielsweise der Einsatz relativ hoher Mengen an oberflächenaktivem Mittel, starkes Rühren oder erhöhter Initiatoreinsatz. Derartige feinteilige. Dispersionen von Polymeren sind aus der EP-B-612 770 (US-A-5 563 213) und der EP-B-612 569 bekannt. Sie können auch nach dem bekannten Verfahren für Saatpolymerisationen (zum Beispiel US-A-4 391 940) hergestellt werden.

Das Gewichtsverhältnis der Komponenten A) und B) in der Dispersion kann in weiten Grenzen schwanken, solange eine nichtmonomodale Zahlenverteilung des Partikeldurchmessers vorliegt. Sofern eine dichte Kugelpackung der Partikel angestrebt wird, ist das Gewichtsverhältnis zwischen den Komponenten aufgrund der bekannten Teilchenradien leicht zu berechnen beziehungsweise abzuschätzen. Sofern ein poröses Substrat beschichtet wird, wird man einen höheren Anteil an Komponente B) einsetzen.

Generell können die Komponenten A) und B) jeweils im Verhältnis ven 1 bis 99 Gew.-%, vorteilhaft 10 bis 90 Gew.-%, vorzugsweise 20 bis 80 Gew.-%, insbesondere 30 bis 70 Gew,-%, vorliegen. Der Fachmann wird im Einzelfall - gegebenenfalls mit Hilfe einfacher Vorversuche - für das jeweilige Substrat ein geeignetes GewichtsverhäItnis der Komponenten "maßschneidern".

Für die Komponente A) eignen sich die handelsüblichen Dispersionen von Fluorpolymeren mit einer mittleren Teilchengröße von mindestens 200 nm (Zahlenmittel). Die Korngrößenverteilung solcher handelsüblicher Dispersionen liegt im Bereich von 180 bis 300 nm.

Die erfindungsgemäßen Dispersionen werden durch Vermischen einer wäßrigen Dispersion der Komponente A) und einer wäßrigen Dispersion der Komponente B) erhalten und können für viele Einsatzzwecke unmittelbar - ohne Tensidzusatz - verwendet werden.

Für andere Anwendungszwecke sowie zur Verminderung des Transportvolumens wird man höher konzentrierte Dispersionen einsetzen als sie durch Vermischen der Einzeldispersionen beziehungsweise bei der entsprechenden Führung einer Polymerisation zu einer bimodalen Teilchengrößenverteilung erhalten werden. In diesen Fällen wird man die Dispersion nach an sich bekannten Methoden aufkonzentrieren. Geeignet ist beispielsweise die Ultrafiltration (US-A-4 369 266), wobei üblicherweise anionische Tenside vom Typ des Natriumdodecylsulfonats oder nichtionische Tenside vom Typ der Alkylphenoloxethylate zugesetzt werden. Besonders vorteilhaft sind längerkettige Alkylaminoxide (US-A-5 219 910), die gut biologisch abbaubar sind. Das Aufkonzentrieren erfolgt zweckmäßig nach dem Vermischen der Komponenten.

Die Menge der zugesetzten Tenside richtet sich nach der Art des Aufkonzentrierungsverfahrens und auch nach dem späteren Anwendungszweck. Sie liegt im allgemeinen im Bereich von 4 bis 15 Gew.-%, bezogen auf den Polymerfeststoffgehalt. Sind die erfindungsgemäßen Dispersionen beispielsweise für die Metallbeschichtung vorgesehen, so wird ein relativ niedriger Tensidgehalt von etwa 5 Gew.-% ausreichen. Für die Beschichtung von Glasfasergeweben ist üblicherweise ein Tensidgehalt von 9 bis 11 Gew.-% erforderlich. In diesen Fällen wird man ein Tensid auswählen, das während oder nach der Filmbildung beim Sintern leicht abgetrennt wird, beispielsweise eines der genannten Aminoxide.

Die erfindungsgemäßen Dispersionen eignen sich für die Herstellung von Überzügen auf glatten, porösen oder faserförmigen Materialien, beispielsweise zur Tränkung oder Imprägnierung von flächenförmigen oder nichtflächenförmigen Fasermaterialien oder porösen Stoffen, beispielsweise aus Graphit. An glatten Substraten seien Oberflächen aus Metall, Keramik, Glas oder Kunststoff genannt. Bei der Beschichtung von Metallen kann - falls erforderlich - ein für solche Zwecke übliches Bindeharz der erfindungsgemäßen Dispersion zugesetzt werden oder aber die Metallfläche in bekannter Weise vorbehandelt werden.

Ein bevorzugtes Einsatzgebiet liegt in der Beschichtung von Glasfasergeweben. Gegenüber einer Behandlung mit vergleichbaren Dispersionen der Einzelkomponenten können mit den erfindungsgemäßen Dispersionen die gewünschten Schichtdicken in signifikant weniger Verfahrensschritten erreicht werden, ohne daß es zu einer Rißbildung oder ungleichmäßigen Filmen kommt. Der Einsatz der erfindungsgemäßen Dispersionen bedeutet somit eine erhebliche Einsparung von Verfahrensschritten und damit eine beachtliche Ersparnis an Zeit und Kosten. Dieser Vorteil muß nicht durch Qualitätseinbußen erkauft werden, vielmehr zeigen die erfindungsgemäß erhaltenen Filme eine dichte Struktur und größere Härte als die mit den Einzelkomponenten erhaltenen Überzüge. Bezüglich weiterer Einzelheiten kann auf die US-A-5 576 381 verwiesen werden.

Mit den erfindungsgemäßen Dispersionen werden Überzüge geringer Porosität und hoher elektrischer Durchschlagsfestigkeit erhalten. Weiterhin wird die Haftung am Substrat, vor allem an porösen Oberflächen und Gebilden, verbessert.

Die Erfindung wird in den folgenden Beispielen noch näher erläutert.

### Beispiel 1

Durch Vermischen von 100 Gew.-Teilen einer 58gew.%igen wäßrigen PTFE-Dispersion mit einer mittleren Teilchengröße (Zahlenmittel) von 240 nm und 33,14 Gew.-Teilen einer 21gew.%igen wäßrigen Dispersion eines Copolymeren aus 96,4 Gew.-Teilen TFE-Einheiten und 3,6 Gew.-Teilen PPVE-Einheiten mit einer mittleren Teilchengröße (Zahlenmittel) von 80 nm wird eine wäßrige Dispersion erhalten, die, bezogen auf Fluorpolymere, 88 Gew.-% PTFE und 12 Gew.-% Copolymer enthält.

Mit dieser Dispersion wird ein Gießfilm der Dicke 25 ± 3 µm hergestellt. Die elektrische Durchschlagsfestigkeit dieses Films beträgt 264 kV/mm. Zum Vergleich zeigt ein Gießfilm, der nur mit der PTFE-Dispersion erhalten wurde, bei einer Dicke von 30 ± 3 µm eine elektrische Durchschlagsfestigkeit von 48,3 kV/mm.

Anmerkung: Die unterschiedliche Filmdicke ist durch die unterschiedliche Viskosität der Dispersion bedingt. Da die Durchschlagsfestigkeit jedoch auf mm-Schichtdicke bezogen ist, ist diese Abweichung in der Meßmethode berücksichtigt.

### Beispiel 2

Auf ein geätztes Aluminiumblech von 1 mm Dicke wird die in Beispiel 1 genannte Dispersion mit einem Feststoffgehalt von 88 Gew.-% PTFE und 12 Gew.-% Copolymer durch Spritzen aufgebracht. Nach Trocknen erhält man eine Schichtdicke von 12 µm.

Zum Vergleich wird eine entsprechende Schicht mit der nur PTFE enthaltenen Dispersion aufgebracht.

Die Porosität der Schichten wird durch Auftropfen von konzentrierter Salzsäure geprüft. Bei der erfindungsgemäßen Schicht entwickeln sich innerhalb von 3 Minuten nur wenige Gasblasen, während bei der PTFE-Schicht eine erhebliche Gasentwicklung auftritt.

## Patentansprüche

1. Wäßrige Dispersion von durch Emulsionspolymeristion gewonnenen Fluorpolymeren unterschiedlicher Teilchengröße, enthaltend mindestens ein Fluorpolymer A) mit einer mittleren Teilchengröße (Zahlenmittel) von mindestens 200 nm und mindestens ein Fluorpolymer B) mit einer mittleren Teilchengröße (Zahlenmittel) von höchstens 100 nm, wobei eine der Komponenten A) und B) ein Thermoplast ist und die andere Komponente nicht aus der Schmelze verarbeitbar ist, und wobei die gesamte Dispersion eine nichtmonomodale Zahlenverteilung des Partikeldurchmessers besitzt.

2. Dispersion nach Anspruch 1, bei der die Komponente A) nicht aus der Schmelze verarbeitbar ist.

3. Dispersion nach Anspruch 2, in der die Komponente A) Polytetrafluorethylen ist.

4. Dispersion nach einem oder mehreren der vorhergehenden Ansprüche, **gekennzeichnet durch** einen Gehalt an einem Tensid.

5. Dispersion nach einem oder mehreren der vorhergehenden Ansprüche, bei der die Komponenten A) und B) jeweils im Verhältnis 1 bis 99 Gew.-% vorliegen.

6. Dispersion nach einem oder mehreren der vorhergehenden Ansprüche, bei der die Komponenten A) und B) jeweils im Verhältnis 10 bis 90 Gew.-% vorliegen.

7. Dispersion nach Anspruch 5, wobei die Komponenten A) und B) jeweils im Verhältnis 20 bis 80 Gew.-% vorliegen.

8. Dispersion nach Anspruch 5 oder 6, wobei die Komponenten A) und B) jeweils im Verhältnis 30 bis 70 Gew.-% vorliegen.

9. Dispersion nach einem oder mehreren der vorhergehenden Ansprüche, wobei die Komponente A) eine mittlere Teilchengröße (Zahlenmittel) von mindestens 230 nm aufweist.

10. Dispersion nach einem oder mehreren der vorhergehenden Ansprüche, wobei die Komponente B) eine mittlere Teilchengröße (Zahlenmittel) von höchstens 80 nm hat.

11. Dispersion nach Anspruch 10, **dadurch gekennzeichnet, daß** die Komponente B) eine mittlere Teilchengröße (Zahlenmittel) von höchstens 50 nm hat.

12. Dispersion nach Anspruch 10, wobei die Komponente B) eine mittlere Teilchengröße (Zahlenmittel) von höchstens 40 nm hat.

13. Verfahren zur Herstellung einer Dispersion nach einem oder mehreren der vorhergehenden Ansprüche, **dadurch gekennzeichnet, daß** man eine wäßrige Dispersion mindestens eines Fluorpolymeren A) mit einer wäßrigen Dispersion mindestens eines Fluorpolymeren B) mischt und gegebenenfalls auf den gewünschten Feststoffgehalt aufkonzentriert.

14. Verfahren nach Anspruch 13, **dadurch gekennzeichnet, daß** der Feststoffgehalt auf 40 bis 65 Gew.-% aufkonzentriert wird.

15. Verwendung der Dispersionen nach den Ansprüchen 1 bis 12 zur Tränkung, Imprägnierung oder Beschichtung von Oberflächen.

16. Verwendung der Dispersionen nach den Ansprüchen 1 bis 12 zur Formulierung von Metallbeschichtungssystemen.

17. Verwendung der Dispersionen nach den Ansprüchen 1 bis 12 zur Tränkung oder Imprägnierung von Fasern oder Flächengebilden aus Fasern oder porösen Stoffen und zur Beschichtung von Glasfasergeweben.

## Claims

1. An aqueous dispersion of fluoropolymers of different particle size obtained by emulsion polymerization and containing at least one fluoropolymer A) with an average particle size (number-average) of at least 200 nm and at least one fluoropolymer B) with an average particle size (number-average) of not more than 100 nm, one of components A) and B) being a thermoplastic and the other component not being processable from the melt, and the entire dispersion having a non-monomodal number distribution of particle diameter.

2. A dispersion as claimed in claim 1, in which component A) is not processable from the melt.

3. A dispersion as claimed in claim 2, in which component A) is polytetrafluoroethylene.

4. A dispersion as claimed in one or more of the preceding claims which has a surfactant content.

5. A dispersion as claimed in one or more of the preceding claims in which components A) and B) are each present in a proportion of from 1 to 99% by weight.

6. A dispersion as claimed in one or more of the preceding claims in which components A) and B) are each present in a proportion of from 10 to 90% by weight.

7. A dispersion as claimed in claim 5, where components A) and B) are each present in a proportion of from 20 to 80% by weight.

8. A dispersion as claimed in claim 5 or 6, where components A) and B) are each present in a proportion of from 30 to 70% by weight.

9. A dispersion as claimed in one or more of the preceding claims, where component A) has an average particle size (number-average) of at least 230 nm.

10. A dispersion as claimed in one or more of the preceding claims, where component B) has an average particle size (number-average) of not more than 80 nm.

11. A dispersion as claimed in claim 10, wherein component B) has an average particle size (number-average) of not more than 50 nm.

12. A dispersion as claimed in claim 10, where component B) has an average particle size (number-average) of not more than 40 nm.

13. A process for preparing a dispersion as claimed in one or more of the preceding claims, wherein an aqueous dispersion of at least one fluoropolymer A) is mixed with an aqueous dispersion of at least one fluoropolymer B) and, if desired, is concentrated to the desired solids content.

14. The process as claimed in claim 13, wherein the solids content is concentrated to 40 to 65% by weight.

15. The use of the dispersions as claimed in any of claims 1 to 12 for saturating, impregnating or coating surfaces.

16. The use of the dispersions as claimed in any of claims 1 to 12 for formulating metal-coating systems.

17. The use of the dispersions as claimed in any of claims 1 to 12 for saturating or impregnating fibers or sheet-like articles made from fibers or porous materials, and for coating glass-fiber fabrics.

## Revendications

1. Dispersion aqueuse de polymères fluorés de tailles de particules différentes, obtenus par polymérisation en émulsion, contenant au moins un polymère fluoré A) ayant un taille moyenne de particules (moyenne en nombre) d'au moins 200 nm et au moins un polymère fluoré B) ayant une taille moyenne de particules (moyenne en nombre) de 100 nm au maximum, dans laquelle un des composants A) et B) et un thermoplastique et l'autre composant n'est pas transformable à l'état fondu, et dans laquelle la dispersion globale possède une répartition en nombre non monomodale du diamètre des particules.

2. Dispersion selon la revendication 1, dans laquelle le composant A) n'est pas transformable à l'état fondu.

3. Dispersion selon la revendication 2, dans laquelle le composant A) est le polytétrafluoroéthylène.

4. Dispersion selon une ou plusieurs des revendications précédentes, **caractérisée par** une teneur en un agent tensioactif.

5. Dispersion selon une ou plusieurs des revendications précédentes, dans laquelle les composants A) et B) sont présents respectivement dans la proportion de 1 jusqu'à 99 % en poids.

6. Dispersion selon une ou plusieurs des revendications précédentes, dans laquelle les composants A) et B) sont présents respectivement dans la proportion de 10 jusqu'à 90 % en poids.

7. Dispersion selon la revendication 5, dans laquelle les composants A) et B) sont présents respectivement dans la proportion de 20 jusqu'à 80 % en poids.

8. Dispersion selon la revendication 5 ou 6, dans laquelle les composants A) et B) sont présents respectivement dans la proportion de 30 jusqu'à 70 % en poids.

9. Dispersion selon une ou plusieurs des revendications précédentes, dans laquelle le composant A) présente une taille moyenne de particules (moyenne en nombre) d'au moins 230 nm.

10. Dispersion selon une ou plusieurs des revendications précédentes, dans laquelle le composant B) a une taille moyenne de particules (moyenne en nombre) de 80 nm au maximum.

11. Dispersion selon la revendication 10, **caractérisée en ce que** le composant B) a une taille moyenne de particules (moyenne en nombre) de 50 nm au maximum.

12. Dispersion selon la revendication 10, **caractérisée en ce que** le composant B) a une taille moyenne de particules (moyenne en nombre) de 40 nm au maximum.

13. Procédé pour la fabrication d'une dispersion selon une ou plusieurs des revendications précédentes, **caractérisé en ce qu'**on mélange une dispersion aqueuse d'au moins un polymère fluoré A) avec une dispersion aqueuse d'au moins un polymère fluoré B) et **en ce qu'**on concentre éventuellement le mélange à la teneur souhaitée en matières solides.

14. Procédé selon la revendication 13, **caractérisé en ce que** la teneur en matières solides est concentrée à 40 à 65 % en poids.

15. Utilisation des dispersions selon les revendications 1 à 12 pour l'imbibition, l'imprégnation ou le revêtement de surfaces.

16. Utilisation des dispersions selon les revendications 1 à 12 pour la formulation de systèmes de revêtement de métaux.

17. Utilisation des dispersions selon les revendications 1 à 12 pour l'imbibition ou l'imprégnation de fibres ou de produits plans constitués de fibres ou de substances poreuses et pour le revêtement de tissus de fibre de verre.
